# EUROPEAN PATENT SPECIFICATION

(11) **EP 3 798 285 B1**
(45) Date of publication and mention of the grant of the patent: **13.04.2022**
(21) Application number: 19734496.3
(22) Date of filing: 05.03.2019
(51) Int. Cl.: C10B 53/07, C10B 47/44, C10B 57/04, C10B 57/06, C09C 1/48, B29B 17/04

(54) **METHOD OF OBTAINING CARBON-CONTAINING MATERIAL FROM RECYCLABLE TIRES AND/OR RUBBER PRODUCTS**
VERFAHREN ZUR GEWINNUNG VON KOHLENSTOFFHALTIGEM MATERIAL AUS WIEDERVERWERTBAREN REIFEN UND/ODER GUMMIPRODUKTEN
PROCÉDÉ DE PRODUCTION DE MATIÈRE CARBONÉE À PARTIR DE PNEUS ET/OU ARTICLES EN CAOUTCHOUC RECYCLÉS

(30) Priority: 18.04.2018 UA 201804242
(43) Date of publication of application: 31.03.2021
(73) Proprietor: Teplitsky, Alexander, 42751 Netanya (IL)
(72) Inventor: DZYURA, Evgeniy Antonovich, Dnipro, 49010 (UA); TEPLITSKY, Alexander, Netanya 42751 (IL)
(74) Representative: KASTEL Patentanwälte PartG mbB
(86) International application number: PCT/IB2019/000374
(87) International publication number: WO 2019/202387

(56) References cited:
- WO-A1-2011/010323
- WO-A2-02/26914
- TW-B- 462 984
- US-A1- 2014 294 686
- DATABASE WPI Week 201719 Thomson Scientific, London, GB; AN 2017-10642V XP002793849, & CN 106 350 092 A (GEM TIANJIN URBAN MINING RECYCLING IND) 25 January 2017 (2017-01-25)

## Description

### TECHNICAL FIELD

The invention relates to the field of processing of raw materials from rubber-containing products and can be used when disposing of worn tires or other rubber products to obtain carbon-containing material and other products.

### PRIOR TECHNICAL LEVEL (PRIOR ART)

A significant proportion of the products of human activity that pollute the environment are worn car tires and various rubber products.

Recycling of secondary raw materials is an important direction to reduce environmental pollution and a source of secondary raw materials for new production.

A significant source of such raw materials are rubber products, including worn tires, make up about 90% of the total volume of this type of secondary raw materials.

However, those properties of tires that ensure their durability and safety during operation make worn tires an extremely difficult object for recycling.

Disposal of car tires and other rubber products using pyrolysis technology with the formation of gaseous products and solid residue has become widespread.

Gaseous pyrolysis products are used as an energy carrier, and the solid carbon residue, which makes up to 30% of the weight of the tire, is most often secondary waste.

Thus, an ecologically important and economically important problem is the creation of an efficient processing technology in which carbon-containing material can be obtained from the solid pyrolysis residue, suitable for recycling in the production of new car tires.

There is a method of extracting carbon black and hydrocarbons from used tires, including splitting tires into fragments less than 1.5 inches; pyrolysis of fragments in the reaction vessel for pyrolysis at a temperature of 399 to 982 °C ( 750 to 1800 degrees Fahrenheit) and in oxygen-limited hydrocarbon vapors at a pressure of 1 to 20 PSIA for 90 minutes to obtain a solid phase and a vapor phase; obtaining a separate high-boiling condensate process stream from a portion of said vapor phase in said reaction vessel; distilling a portion of said condensate back to the indicated fragments; the fractionation of the second part of the specified vapor phase to obtain pyrolysis oil and gas; treatment of the solid phase after its exit from the reaction vessel for pyrolysis, includes: crushing in a jet mill with a stream of supplied air; passing the air stream exiting the mill through a mechanical separator to produce a waste stream of garbage particles and a stream of air containing carbon black particles; passing a stream of air with carbon black particles through a cyclone separator to remove 80-90% of relatively large carbon black particles and to get an air stream of a thin product containing relatively smaller carbon black particles [«Process for recovering carbon black and hydrocarbons from used tires» "US4250158 A" (INTENCO INC) (US) C01B31 / 02; C09C1 / 48; 10.02.1981] [1].

A known method of making carbon black and hydrocarbons from worn tires, including: cutting tires into fragments; pyrolysis of fragments in a pyrolysis reaction vessel at a temperature and pressure and reaction time sufficient for the fragments to dissociate into the vapor phase and the solid phase; recirculation a portion of the solid phase back to the reactor; the specified stage of pyrolysis, including indirect, internal heating of the fragments in the reaction vessel with the molten salt; obtaining carbon black from the solid phase; and processing the specified steam hydrocarbon production phases ["Process for recovering carbon black and hydrocarbons from used tires" US4284616A (INTENCO INC) (US) C01B31 / 02; C01B31 / 00; C09C1 / 48; 08/18/1981] [2].

A disadvantage of the known methods is that the carbon-containing material obtained during the processing process has a low surface activity and cannot be used as a filler in the production of new tires.

In addition, it has many negative impurities.

The use of such material as a filler does not provide the new tires with the required strength and performance properties.

The closest in purpose, technical essence and the achieved result is a method of obtaining carbon-containing material from recyclable tires and / or rubber products, including:
mechanical crushing of recycled tires and / or rubber products in the grinder and receiving the charge;
feeding the charge of crushed tire elements into the reactor and pyrolysis with the formation of gaseous products and a solid residue;
continuous removal of gaseous pyrolysis products from the reactor, followed by condensation of liquid products into a condensation column of liquid fractions, discharging solid residue from the reactor and cooling it in bunker cooler;
rough crushing of solid residue in the crusher followed by metal removal in the magnetic separator [Apparatus and method for recovering marketable products from scrap rubber" US7416641B2 (DENISON GILBERT W (US); FEDERAL RECYCLING TECHNOLOGY, INC (US)) C10B 21/20; 26.08.2008] [3].

In the known method [3] for the processing of the solid residue of pyrolysis and the production of carbon-containing material, the crude technical carbon after pyrolysis is ground in a jet mill and cleaned in a pneumatic system.

The disadvantage of this method is that the carbonaceous material obtained has a low surface activity and contains a large amount of impurities, which excludes the use of the carbonaceous material obtained as a filler in the production of new car tires, as. it will reduce their strength and performance characteristics.

### SUMMARY OF INVENTION

The basis of the present invention is the task of creating such a method of recycling utilized tires and / or rubber products, the use of which would eliminate harmful impurities, increase the surface activity of the resulting carbon-containing material, which will use the resulting carbon-containing material as a filler in the production of new car tires.

The problem is solved in that in the method of obtaining carbon-containing material from recyclable tires and / or rubber products, including:
mechanical crushing of recycled tires and / or rubber products in the grinder and receiving the charge;
feeding the charge to the reactor and pyrolysis with the formation of gaseous products and a solid residue;
continuous removal of gaseous products from the reactor with the subsequent condensation of liquid products in the condensation column of liquid fractions, discharge of solid residue from the reactor and its cooling;
rough crushing of solid residue in the crusher and removal of metal in the magnetic separator, **according to the invention**
before mechanical crushing, metal bead rings are removed from recycled tires;
before feeding the charge into the reactor, an inhibitor of coke formation is introduced into it, in the amount of 3-20% by weight of the charge, consisting of a solid component representing any combination of thermoplastic linear polymers from the group: polyethylene, polypropylene, polyethylene terephthalate, polystyrene, and a liquid component - polymethylsiloxane , in the amount of 0.5 - 1.0% by weight of the inhibitor, the pyrolysis of the charge in the reactor is carried out at a temperature of 350 ° C in the main working area to 600 ° C at the exit of the reactor;
removal of metal from the crushed solid residue is performed until the metal content is not more than 0.1% of the total mass of the solid residue, then the treatment and activation of the solid residue with superheated steam at a temperature of 250-350 ° C in the steam chamber are performed and the activated solid residue is crushed in a vortex mill;
a two-stage classification of the solid residue is made: at the air-through separator, from which the fine fraction is sent to further fine classification into an electro-mass classifier, and the large fraction - screening, is sent to the bunker, and then to the thermal furnace, where residual carbon is removed and an additional target product is obtained - a mineral component or re-grinding into a vortex mill, and
the separation of the fine fraction of the solid residue is carried out in the electric mass classifier for fraction F1, less than 45 µm (F1 <45 µm), and fraction F2, more than 45 µm (F2> 45 µm) returning the solid residue powder of the F2 fraction to more than 45 µm (F2> 45 µm) from the electrical mass classifier for repeated fine grinding in a vortex mill;
the powder fraction F1 is less than 45 µm (F1 <45 µm) from the electric mass classifier is sent to the storage bin.

Obtained by improving the preparation of the charge, optimizing the processes of pyrolysis and removing metal from the crushed solid residue, optimizing the complex of technological operations for final processing of the solid residue through its activation, fine grinding, classification and removal of metallic impurities, allows to obtain carbon-containing material with a high level of surface activity and minimize its content of harmful impurities, which in turn allows you to use it as a filler for production of new tires, as it provides the required level of their strength and performance characteristics.

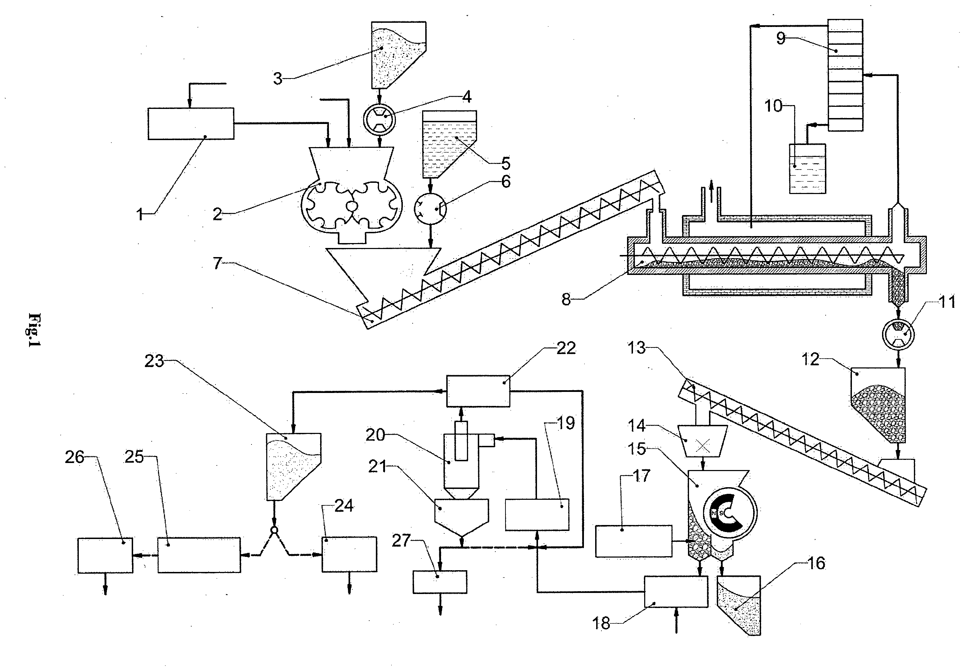

The invention is further explained in detail describing its implementation with reference to the drawing, which presents a diagram of the installation for the production of carbon-containing material, which contains:
1. Tire Rings Removal Machine
2. Chopper
3. Bunker of Inhibitor Solid Component
4. Dispenser solid inhibitor component
5. The bunker of the liquid component of the inhibitor
6. Dispenser liquid component of the inhibitor
7. Transporter
8. Pyrolysis reactor
9. Condensation column of liquid fractions.
10. Bunker of liquid fractions
11. Dispenser solid pyrolysis residue
12. 16. Bunker cooler
13. Transporter
14. Crusher
15. Separator Magnetic
16. Metal storage hopper
17. The determinant of the metal
18. Steam chamber
19. Swirl Mill
20. Air Passage Separator
21. Bunker (screenings)
22. Electro-mass classifier
23. Bunker
24. Apparatus for packing carbon powder material
25. Granulator
26. The apparatus of packing granules of carbon-containing material.
27. Thermal oven

The method of obtaining carbon-containing material from recyclable tires and / or rubber products is as follows.

Metal bead rings are removed from recycled tires on the bead rings removal machine 1, which eliminates the costs of crushing them and removing the crushed parts.

Then recyclable tires and / or rubber products are fed to the chopper 2 to obtain the charge.

As a chopper (shredder) industrial chopper (shredder) can be used.

Also in the chopper 2 from the hopper 3 the solid component of the coke formation inhibitor is fed through the dispenser 4.

The crushed rubber-containing raw materials and the solid component of the coke formation inhibitor from the chopper 2, are fed into the hopper of the conveyor 7.

In the loading hopper of the conveyor 7 from the hopper 5, through the pump - dispenser 6, the liquid component of the inhibitor of coke formation is fed.

The inhibitor of coke formation is 3-20% by weight of the charge and consists of solid and liquid components.

The solid component of the charge is any mass combination of thermoplastic linear polymers from the group of polyethylene, polypropylene, polyethylene terephthalate, polystyrene.

The liquid component is polymethylsiloxane, in the amount of 0.5 - 1.0% of the total mass of the inhibitor.

The use of a coke formation inhibitor can significantly reduce or completely eliminate the formation of coke on carbon particles during pyrolysis in the reactor 8, which ensures the production of carbon-containing material with high surface activity.

The prepared charge, together with a coke formation inhibitor, is fed by the conveyor 7 to the pyrolysis reactor 8.

Pyrolysis in the reactor 8 is carried out at a temperature of 350 ° C in the main working zone of the reactor and to 600 ° C at the exit of the reactor.

This provides an effective thermal decomposition of the charge and obtaining a solid residue with a given content of volatile components.

In the process of pyrolysis from the reactor 8 gaseous products are continuously removed, followed by condensation of liquid products in the column 9.

The solid residue is discharged through the gateway-dispenser 11 and fed to the cooler-cooler 12, where it is cooled to ambient temperature.

The condensate of the gaseous products is fed to the bunker 10 of the liquid fraction, and the combustible gas is fed to the pyrolysis furnace of the reactor 8 for combustion and to maintain the optimum pyrolysis temperature.

From the cooling hopper 12, the solid residue is conveyed by the conveyor 13 to the crusher 14 for its rough crushing to a fraction of 1-5 mm, and then to the magnetic separator 15.

In the magnetic separator 15, the metal is removed from the crushed solid residue to a metal content of not more than 0.1% of the total mass of the solid residue, and the amount of metal in it is monitored using the metal determinant 17.

A metal content of more than 0.1% of the total mass of the solid residue does not allow for rubber made using such a carbon-containing material, one of its normalized performance indicators - "rubber aging".

From the magnetic separator 15, the metal is fed to the storage bin 16, and the crushed solid residue is fed to the steam chamber 18.

In the steam chamber 18, the solid residue is activated by superheated steam at a temperature of 250-350 ° C.

This ensures the final cleaning of the surface and pores of the carbon particles from the remaining slag, resulting in an increase in the effective active surface.

Then the activated solid residue is directed to fine grinding in a vortex mill 19, after which the finely ground activated solid residue is fed to a two-stage classification in an air-through separator 20.

From the air-through separator 20, the small and light fraction is sent to a fine classification in the classifier 22, and the large and heavy fraction is sent to the hopper 21.

Screening out of the hopper 21 is fed:
- either in a thermal oven 27, in which residual carbon is removed and an additional target product is obtained - a mineral component consisting of zinc oxide (ZnO) and cobalt oxide (Co2O3),
- or re-fine grinding (recycling) in a vortex mill 19.

After that, in the electro-mass classifier 22, the final fine classification is made for fraction F1 less than 45 µkm (F1 <45 µkm) and fraction F2, more than 45 µkm (F2> 45 µkm).

It has been experimentally established that the presence of particles in the carbon-containing material more than 45 µkm (F1 <45 µkm), does not allow to obtain rubber with the strength characteristics necessary for the production of tires.

The solid residue powder of the F2 fraction is more than 45 µkm (F2> 45 µkm) from the electromass of the classifier 22 is returned to the re-fine grinding (recirculation) to the vortex mill 19.

The powder of the solid residue of fraction F1, less than 45 µkm (F1 <45 µkm) - commercial carbon-containing material is fed to the storage bin 23, and then to the granulator 25 and filling machine 24 or granulator 25, and then to the filling machine 26.

Prepacked carbonaceous material is sent to the consumer or to the warehouse.

### AN EXAMPLE OF THE IMPLEMENTATION OF THE INVENTION

From worn tires on a special machine 1 the bead rings were removed, after which the tires were fed to a chopper (shredder) 2 for grinding. At the same time, from the hopper 3 to the chopper 2 through the dispenser the solid component of the inhibitor in the form of polyethylene and polypropylene wastes from film materials in an amount of 10 to 12% of the total ground mass - was fed.

The crushed mass was supplied by the conveyor 7 to the pyrolysis reactor 8, where at the same time liquid polymethylsiloxane in the amount of 1% of the total amount of loaded polyethylene and polypropylene was fed through the dosing pump 6.

The prepared charge through the conveyor 7 was fed into the rotating and heated furnace gases, pyrolysis reactor 8 with two heating zones.

In the main working area of the reactor 8, the temperature was maintained at 370 ° C, and at the outlet of the reactor 8, the temperature was maintained at 600 ° C, which completely ensured the release of liquid and gaseous pyrolysis products.

In the process of pyrolysis, gaseous products were continuously removed from the reactor 8, followed by condensation of liquid products in the liquid condensation column 9, and the solid residue was discharged and cooled through the lock dispenser 11 for cooling into the cooling hopper 12.

The condensate of the gaseous products was fed to the hopper 10 of the liquid fraction, and the combustible gas was fed to the pyrolysis furnace of the reactor 8 for combustion and to maintain the optimum temperature of pyrolysis in the reactor 8.

Next, the solid residue of pyrolysis in the cooling hopper 12 was cooled to 50 ° C, after which by the conveyor 13 was transferred to the crusher 14 for preliminary rough crushing to a particle size of not more than 5 mm and then to a two-stage magnetic separator 15 to remove iron to normalized content (not more than 0.1%), which was controlled by the determinant of the metal 17.

The separated iron-containing part of the solid residue was sent to the storage hopper 16 of the metal.

Then, the carbon-containing part of the solid residue was treated in the steam chamber 18 in a stream of superheated steam with a temperature of 300 ° C, and then cooled to 40 ° C and fed into a vortex mill 19 for fine grinding.

After fine grinding, the carbon-containing material from the vortex mill 19 was fed to the air-pass separator 20, where the heavy mineral components were partially removed.

Next, the powdered product entered the electro-mass classifier 22, where the final fine classification was carried out for fraction F1 less than 45 µkm (F1 <45 µkm) and fraction F2, more than 45 µkm (F2> 45 µkm).

The solid residue powder of the F2 fraction more than 45 µkm (F2> 45 µkm) from the electromass of the classifier 22 was returned to re-fine grinding (recirculation) to the vortex mill 19.

As a result of a fine classification in the electro-mass classifier 22, a powder of the solid residue of fraction F1 was obtained, less than 45 µkm (F1 <45 µkm).

Thus, a carbon-containing material with an average particle size of 5 to 10 µm is obtained, which is fed to the storage bin 23 and then to the packaging in the filling machine 24 or to the granulator 25.

The prepacked product is delivered to the consumer or to the warehouse.

The quality indicators of the obtained carbon-containing material of test samples according to the ASTM methods were:

| | |
|---|---|
| iodine adsorption number, g / kg (D1510). | 78.4, |
| total area of nitrogen adsorption (NSA), m2 / g (D6566) | 64.5, |
| specific surface area according to CTAB, m2 / g (D3765) | 66.0, |
| oil absorption number, cm3 / 100 g (D2714) | 81.2, |
| power of coloring, units (D3265) | 60.1, |
| the transmittance of the toluene extract,% (D1618) | 98,0, |
| pH value, units (D1512) | |

The results of experimental physical-mechanical tests of standard rubber based on styrene-butadiene rubber SBR-1500, containing 40 wt. including the obtained carbon-containing material was as follows:

| | |
|---|---|
| conditional stress at elongation of 300%, MPa | 12.0, |
| conditional tensile strength, MPa | 18.0, |
| relative elongation,% | 423, |
| tear resistance, kN / m | 42, |
| Shore hardness, arb. units | 60 |

Physical-mechanical indicators of tire rubber carcass prototypes mixtures containing standard carbon black and the resulting carbon-containing material showed almost identical results.

The information indicates the industrial applicability of the proposed method for producing carbon-containing material from worn tires and / or rubber products, in which the resulting carbon-containing material can be effectively used as a complete replacement for low-active grades and a partial replacement for semi-active grades of standard carbon black in the manufacture of new tires and rubber products .

Thus, a carbon-containing material with an average particle size of 5 to 10 µm is obtained, which is fed to the storage hopper 23 and then to the packaging in the apparatus for packing carbon powder material 24 or to the granulator 25.

The prepacked product is delivered to consumers or to the warehouse.

The quality indicators of the obtained carbon-containing material of the test samples in accordance with ASTM methods were as following:

| | |
|---|---|
| iodine adsorption number, g/kg (D1510). | 78,4, |
| total area of nitrogen adsorption (NSA), m2 g (D6566) | 64,5, |
| specific surface area according to CTAB, m2/g (D3765) | 66,0, |
| oil absorption number, cm3/100 g (D2714) | 81,2, |
| power of coloring, units (D3265) | 60,1, |
| the transmittance of the toluene extract, % (D1618) | 98,0, |
| pH value, units (D1512) | |

The results of physical and mechanical tests and experiments of standard rubber based on styrene-butadiene rubber SBR-1500, containing 40 wt. including the obtained carbon-containing material was as follows:

| | |
|---|---|
| nominal stress at elongation of 300%, MPa | 12,0, |
| nominal tensile strength, MPa | 18,0, |
| percent elongation, % | 423, |
| tear resistance, kN/m | 42, |
| Shore hardness, arb. units | 60. |

Physical and mechanical factors of tire rubber carcass tested samples of mixtures containing standard carbon black and the obtained carbon-containing material demonstrated almost identical results.

The given evidences and information have proved the industrial applicability of the proposed method for producing carbon-containing material from worn tires and/or rubber products, when the carbon-containing material obtained can be effectively used and completely replace low-active grades of standard carbon black and partially replace semi-active grades in manufacturing new tires and rubber products.

## Claims

1. of obtaining carbon-containing material from recyclable tires and / or rubber products, including:
mechanical crushing of recycled tires and / or rubber products in a grinder and receiving the charge;
feeding the charge to a reactor followed by pyrolysis with the formation of gaseous products and a solid residue;
continuous removal of the gaseous products from the reactor with the subsequent condensation of liquid products in a condensation column of liquid fractions, discharge of solid residue from the reactor and its cooling;
rough crushing of the solid residue in a crusher and removal of the metal in the magnetic separator,
**characterized in that**
before mechanical crushing, the metal bead rings are removed from recycled tires;
before feeding the charge into the reactor, an inhibitor of coke formation is introduced into it, in an amount of 3-20% by weight of the charge, consisting of a solid component representing any combination of thermoplastic linear polymers from the group: polyethylene, polypropylene, polyethylene terephthalate, polystyrene, and a liquid component - polymethylsiloxane in an amount of 0.5 - 1.0% by weight of the inhibitor, the pyrolysis of the charge in the reactor is carried out at a temperature of 350 ° C in the main working area and to 600 ° C at the exit of the reactor;
removal of metal from the crushed solid residue is performed until the metal content is not more than 0.1% of the total mass of the solid residue, then a treatment and an activation of the solid residue with superheated steam at a temperature of 250-350 ° C in the steam chamber are performed and the activated solid residue is crushed in a vortex mill;
a two-stage classification of the solid residue is made at an air-through separator, from which the fine fraction is sent to further fine classification into an electro-mass classifier, and the large fraction is screened, sent to a bunker and then to a thermal furnace, where residual carbon is removed and an additional target product is obtained - a mineral component or re-grinding into a vortex mill, and
the separation of the fine fraction of the solid residue is carried out in an electric mass classifier for fraction F1, less than 45 µm (F1 <45 µm) and fraction F2, more than 45 µm (F2> 45 µm);
returning the solid residue powder of the F2 fraction to more than 45 µm (F2> 45 µm from the electrical mass classifier for repeated fine grinding in a vortex mill;
the powder fraction F1 less than 45 µm (F1 <45 µm) from the electric mass classifier is sent to the storage bin.

## Patentansprüche

1. Verfahren zur Gewinnung von kohlenstoffhaltigem Material aus wiederverwertbaren Reifen und/oder Gummiprodukten, umfassend:
mechanisches Zerkleinern von recycelten Reifen und/oder Gummiprodukten in einer Mühle und Aufnahme der Charge;
Aufgeben der Charge in einen Reaktor und anschließende Pyrolyse mit Bildung von gasförmigen Produkten und einem festen Rückstand;
kontinuierliches Entnehmen der gasförmigen Produkte aus dem Reaktor mit anschließender Kondensation flüssiger Produkte in einer
Kondensationskolonne von flüssigen Fraktionen, Abführen des festen Rückstands aus dem Reaktor und dessen Kühlung;
grobes Zerkleinern des festen Rückstands in einem Brecher und Entfernen des Metalls im Magnetabscheider,
**dadurch gekennzeichnet, dass**
vor dem mechanischen Zerkleinern die Metallwulstringe von den recycelten Reifen entfernt werden;
vor dem Aufgeben der Charge in den Reaktor ein Koksbildungsinhibitor in einer Menge von 3-20 Gew.-% der Charge eingebracht wird, bestehend aus einer Feststoffkomponente, die eine beliebige Kombination von thermoplastischen linearen Polymeren aus der Gruppe: Polyethylen, Polypropylen, Polyethylenterephthalat, Polystyrol und einer flüssigen Komponente - Polymethylsiloxan in einer Menge von 0,5-1,0 Gew.-% des Inhibitors repräsentiert, wobei die Pyrolyse der Charge in dem Reaktor bei einer Temperatur von 350°C im Hauptarbeitsbereich und bis 600°C am Ausgang des Reaktors durchgeführt wird,
das Entfernen des Metalls aus dem zerkleinerten festen Rückstand erfolgt, bis der Metallgehalt nicht mehr als 0,1 % der Gesamtmasse des festen Rückstands beträgt, wobei dann eine Behandlung und eine Aktivierung des festen Rückstands mit überhitztem Dampf bei einer Temperatur von 250-350 °C in der Dampfkammer durchgeführt werden und der aktivierte feste Rückstand in einer Wirbelmühle zerkleinert wird;
eine zweistufige Klassierung des festen Rückstands in einem Windsichter erfolgt, aus dem die Feinfraktion zur weiteren Feinklassierung in einen Elektro-Massensichter geleitet wird und die große Fraktion gesiebt, in den Bunker und anschließend in einen Wärmeofen geleitet wird, in dem Restkohlenstoff entfernt und ein zusätzliches Zielprodukt gewonnen wird - eine mineralische Komponente - oder eine erneute Vermahlung in einer Wirbelmühle erfolgt und die Abtrennung der Feinfraktion des festen Rückstands in einem elektrischen Massensichter für die Fraktion F1, kleiner als 45 µm (F1 < 45 µm), und die Fraktion F2, größer als 45 µm (F2 > 45 µm), erfolgt; und
der feste Pulverrückstand der F2-Fraktion zu mehr als 45 µm (F2 > 45 µm) aus dem elektrischen Massensichter zurückgeführt wird für eine wiederholte Feinmahlung in einer Wirbelmühle; und
die Pulverfraktion F1 kleiner als 45 µm (F1 < 45 µm) aus dem elektrischen Massensichter in den Lagerraum geleitet wird.

## Revendications

1. Procédé de production de matière carbonée à partir de pneus et/ou articles en caoutchouc recyclés, comprenant:
le broyage mécanique de pneus et/ou de produits en caoutchouc recyclés dans un broyeur et la réception de la charge;
l'introduction de la charge dans un réacteur suivie d'une pyrolyse avec formation de produits gazeux et d'un résidu solide;
l'élimination continue des produits gazeux du réacteur avec la condensation ultérieure des produits liquides dans une colonne de condensation des fractions liquides, l'évacuation du résidu solide du réacteur et son refroidissement;
le broyage grossier du résidu solide dans un concasseur et l'élimination du métal dans le séparateur magnétique,
**caractérisé en ce que**
avant le broyage mécanique, les anneaux de talon métalliques sont retirés des pneus recyclés;
avant d'introduire la charge dans le réacteur, on y introduit un inhibiteur de la formation de coke, en une quantité de 3-20% en poids de la charge, consistant en un composant solide représentant toute combinaison de polymères linéaires thermoplastiques du groupe: polyéthylène, polypropylène, polyéthylène téréphtalate, polystyrène, et un composant liquide - polyméthylsiloxane en une quantité de 0,5 - 1,0% en poids de l'inhibiteur, la pyrolyse de la charge dans le réacteur étant réalisée à une température de 350°C dans la zone de travail principale et à 600°C à la sortie du réacteur,
l'élimination du métal du résidu solide broyé est effectuée jusqu'à ce que la teneur en métal ne soit pas supérieure à 0,1% de la masse totale du résidu solide, puis un traitement et une activation du résidu solide avec de la vapeur surchauffée à une température de 250-350°C dans la chambre à vapeur sont effectués et le résidu solide activé est broyé dans un broyeur à vortex;
une classification en deux étapes du résidu solide est effectuée au niveau d'un séparateur à travers l'air, à partir duquel la fraction fine est envoyée vers une classification fine supplémentaire dans un classificateur électromasse, et la grande fraction est tamisée, envoyée vers la soute, puis vers un four thermique, où le carbone résiduel est éliminé et un produit cible supplémentaire est obtenu - un composant minéral ou un nouveau broyage dans un broyeur à tourbillon, et la séparation de la fraction fine du résidu solide est effectuée dans un classificateur électrique de masse pour la fraction F1, inférieure à 45 µm (F1 < 45 µm), et la fraction F2, supérieure à 45 µm (F2 > 45 µm);
le retour de la poudre de résidus solides de la fraction F2 à plus de 45 µm (F2 > 45 µm) du classificateur électrique de masse pour un broyage fin répété dans un broyeur à vortex;
la fraction de poudre F1 inférieure à 45 µm (F1 < 45 µm) provenant du classificateur électrique de masse est envoyée dans le bac de stockage.
